# DEMANDE DE BREVET EUROPEEN

(11) **EP 0 917 332 A1**
(43) Date de publication de la demande: **19.05.1999**
(21) Numéro de dépôt: 98402706.0
(22) Date de dépôt: 30.10.1998
(51) Int. Cl.: H04M 1/274

(54) **Procédé d'appel d'un correspondant d'un réseau de communication**

(30) Priorité: 12.11.1997 FR 9714147
(71) Demandeur: SAGEM SA, 75783 Paris Cédex 16 (FR)
(72) Inventeur: Charbonnier, Philippe, 78600 Le Mesnil le Roi (FR); Vegeais, Patrick, 75017 Paris (FR)
(74) Mandataire: Bloch, Gérard

(57) **Abrégé**

Le procédé d'appel d'un correspondant d'un réseau de communication (10), au moyen d'un appareil comportant un clavier numérique (41) et un clavier alphabétique (43), comprend une phase d'appel, au cours de laquelle des valeurs numériques d'indicatif mnémonique sont affectées au clavier alphabétique (43) et lorsque l'appareil comporte un agenda (6) d'indicatifs courts comprenant des lettres, il est d'abord tenté de reconnaître, par l'agenda (6), l'un des numéros courts et l'affectation des valeurs numériques d'indicatif mnémonique n'intervient qu'en cas d'échec.

## Description

Les appareils raccordés à un réseau de communication, par exemple le réseau téléphonique, comportent souvent un répertoire ou agenda de numéros fréquemment appelés, que l'on peut sélectionner en composant leur adresse dans l'agenda sous forme d'un numéro ou indicatif court, à un ou deux chiffres en général.

L'utilisateur doit donc mémoriser la correspondance entre le numéro court et l'identité du correspondant appelé. Afin d'éviter cette servitude, il est encore connu de sélectionner, par un clavier alphabétique, un indicatif d'appel d'après le nom du correspondant, que l'on associe à celui-ci dans l'agenda. La sélection intervient lorsque suffisament de lettres du nom du correspondant ont été saisies pour lever toute ambiguité, dans l'agenda, avec un autre nom. Cette façon de procéder est ainsi beaucoup plus conviviale, même si le codage des adresses de l'agenda, par le nom, est moins rationnel qu'avec des chiffres de numéro court. Dans ces deux cas, l'agenda sert à transcoder une courte chaîne de caractères de sélection en un numéro exploitable.

Il existe encore des indicatifs d'appel de forme mnémonique, pour lesquels l'opérateur du réseau téléphonique attribue à un abonné, par exemple un service de maintenance, un indicatif "prononçable" et facile à retenir. Il s'agit souvent d'une séquence de lettres choisies pour former un mot ou une courte phrase rappelant le nom de cet abonné. Un agenda n'est alors pas nécessaire. Pour composer l'indicatif mnémonique voulu, on utilise un simple clavier numérique, dans lequel les lettres de l'alphabet sont réparties sur chacune des dix touches, par exemple A, B, C sur la touche numérique 1, D, E, F sur la touche 2 et ainsi de suite.

Dans le cas du problème à l'origine de la présente invention, mais qui ne doit pas limiter la portée de la présente demande, la demanderesse a alors eu l'idée d'utiliser le clavier alphabétique d'un télécopieur, qui sert à commander celui-ci, pour, dans une phase d'appel sur le réseau téléphonique, composer tout indicatif mnémonique voulu. Un tel clavier alphabétique est, pour cela, beaucoup mieux adapté qu'un clavier numérique dont chaque touche est surchargée de lettres. Le clavier devient ainsi multifonctionnel.

Cependant, le clavier alphabétique fournit naturellement des lettres, inutilisables telles quelles pour émettre un numéro d'appel, et il se pose le problème de le convertir en chiffres.

La demanderesse a alors poursuivi son idée de saisie d'indicatifs d'appel à forme mnémonique en utilisant un clavier alphabétique, tout en résolvant le problème de conversion évoqué ci-dessus.

Par ailleurs, la demanderesse a cherché une solution qui, bien que ne nécessitant pas d'agenda, n'exclue pas a priori une telle présence, quitte à prendre des mesures complémentaires.

C'est ainsi qu'elle propose son invention.

A cet effet, l'invention concerne un procédé d'appel d'un correspondant d'un réseau de communication, au moyen d'un appareil comportant un clavier numérique et un clavier alphabétique, caractérisé par le fait que, dans une phase d'appel, des valeurs numériques d'indicatif mnémonique sont affectées au clavier alphabétique.

On étend ainsi le clavier de numérotation, qui n'avait jusqu'à maintenant que dix touches, et dispose alors, globalement, d'un clavier alphanumérique, où chaque lettre est reconnue individuellement avant d'être convertie, seule ou en bloc, en un chiffre ou nombre.

On notera que, physiquement, le clavier numérique peut être disposé à l'écart du clavier alphabétique ou au contraire juxtaposé à celui-ci, c'est-à-dire que, dans ce dernier cas, les deux claviers sont des sous-ensembles d'un clavier général, par exemple un clavier classique de type PC.

Avantageusement, lorsque l'appareil comporte un agenda d'indicatifs courts comprenant des lettres, il est d'abord tenté de reconnaître, par l'agenda, l'un des numéros courts et l'affectation des valeurs numériques d'indicatif mnémonique n'intervient qu'en cas d'échec.

En effet, en présence d'un agenda d'indicatifs courts comportant des lettres, la signification de toute lettre saisie est ambiguë puisqu'elle peut soit représenter une partie d'une adresse de sélection dans l'agenda, et doit donc être conservée telle quelle pour être associée au reste de l'adresse, soit représenter une partie d'un indicatif sous forme mnémonique et donc être convertie en un chiffre du numéro d'appel correspondant.

Grâce à l'invention, chaque lettre étant reconnue dans son contexte, agenda ou indicatif mnémonique, on peut donc composer sans risque de confusion tout indicatif mnémonique, qui peut même être alphanumérique, puisque des chiffres intercalés peuvent aussi être autorisés.

L'invention sera mieux comprise à l'aide de la description suivante d'un mode de mise en oeuvre préféré du procédé de l'invention, en référence au dessin annexé, sur lequel :

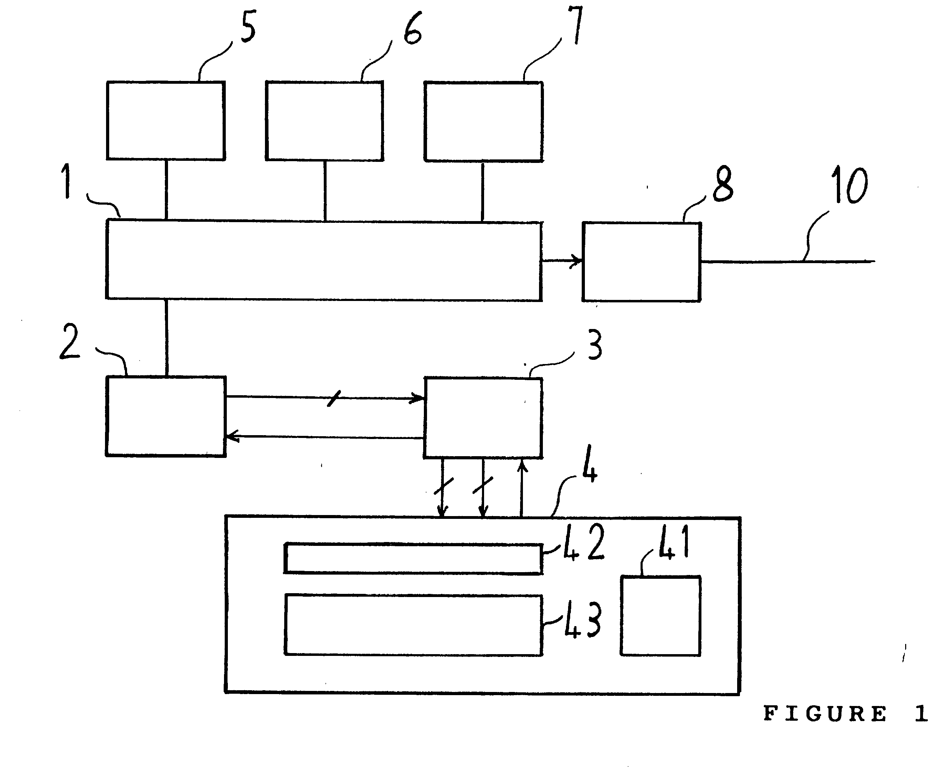

- la figure 1 représente très schématiquement un télécopieur pour la mise en oeuvre du procédé de l'invention, et
- la figure 2 est un organigramme illustrant le déroulement du procédé.

Le télécopieur représenté comporte un microprocesseur 1 de gestion des circuits indiqués ci-après, associé à un microcontrôleur 2 scrutant cycliquement un clavier 4 à travers un double démultiplexeur 3.

Le clavier 4 comporte, ici à droite, un pavé 41 de dix touches numériques avec, à sa gauche, un ensemble 43 de touches alphabétiques et touches de symboles associés. Dans cet exemple, une rangée de touches 42, en partie haute du clavier 4, permet de composer les dix chiffres par actionnement de la touche "majuscules" (schift) du clavier 43.

Il est ici prévu un agenda électronique 5 de numéros de correspondants adressable par numéros, ou indicatifs, courts, ici uniquement numériques, et un agenda électronique 6 du même genre mais adressable d'après le nom du correspondant appelé, donc ici exempt de chiffres. Le télécopieur, et le poste téléphonique, non représenté, qui lui est associé de façon classique, peut donc en pratique appeler un équipement comme un télécopieur ou un poste téléphonique.

Une table de transcodage 7 est aussi reliée au microprocesseur 1 pour convertir les touches alphabétiques du clavier 43 en chiffre ou nombre.

Un modem 8 relie le microprocesseur 1 à une ligne 10 du réseau RTC et permet l'émission de numérotation d'appel, ici sous forme de stgnaux multifréquence DTMF.

La scrutation de l'état des touches du clavier 4 est effectuée par le double démultiplexeur 3, qui reçoit, du microcontrôleur 2, une succession de 128 adresses, soit 7 bits d'adresse. 4 des 7 bits d'adresse sont décodés pour exciter une sortie "ligne" parmi 16 du démultiplexeur 3, les 3 autres bits d'adresse excitant de même une sortie "colonne" parmi 8.

Les touches du clavier 4 sont disposées logiquement, ou reliées électroniquement, en matrice 16 x 8 et ainsi lues séquentiellement. L'état lu est immédiatement retransmis au microcontrôleur 2 qui tient ainsi à jour une table d'état des touches 4 et transmet ces informations au microprocesseur 1 qui peut ainsi adresser les agendas 5 et 6 à partir de ces saisies.

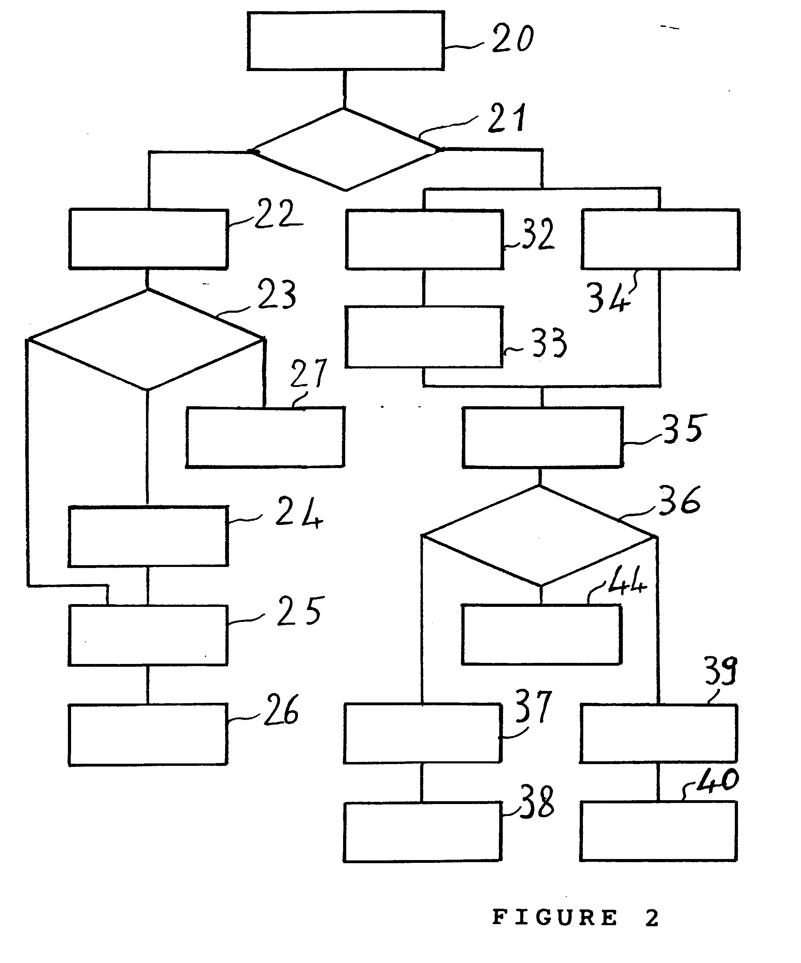

L'organigramme de la figure 2 illustre le procédé de l'invention.

Afin de simplifier l'exposé, on a supposé, comme indiqué, que l'agenda 5 est uniquement numérique et que l'agenda 6 est uniquement alphabétique. En outre, toujours dans le même but, on suppose ici que les numéros mnémoniques sont alphabétiques et précédés de chiffres, c'est-à-dire qu'il s'agit d'indicatifs comportant une partie préfixe numérique, que l'on compose numériquement; c'est par exemple le cas des numéros à appel gratuit qui commencent par le préfixe 800 dans de nombreux pays. On verra cependant plus loin que ces hypothèses simplificatrices ne sont aucunement une exigence.

A une étape 20, le microprocesseur 1 place le télécopieur en phase de saisie de numérotation, c'est-à-dire que le clavier 4, ou au moins les touches susceptibles d'être utilisées pour numéroter, se voit attribuer temporairement la seule fonctionnalité de saisie de numérotation.

A une étape 21, le microprocesseur 1 reçoit du microcontrôleur 2 un code, ici ASCII, représentant une touche activée en premier, éventuellement simultanément avec une touche de fonction (majuscule ou autre).

S'il s'agit d'une lettre, donc provenant du clavier 43, on passe à une étape 22 dans laquelle le microprocesseur 1 recherche, d'après la lettre, une adresse qui réponde et une seule dans l'agenda alphabétique 6. En cas de succès, cela signifie qu'un seul nom de l'agenda 6 commençait par cette lettre.

Ce cas peut avoir été spécifiquement prévu dans l'agenda 6, c'est-à-dire qu'on peut y avoir réservé, pour quelques numéros d'appel fréquemment utilisés, des lettres uniques (ou des séquences courtes de lettres) spécifiques à chacun de ces numéros, ainsi appelés directement par actionnement d'une seule touche alphabétique, éventuellement sans affichage et validation du numéro appelé. Si, à une étape 23, aucune adresse ne répond à cette lettre de début, le microprocesseur 1 indique une erreur de saisie (étape 27), sur un écran non représenté. Si une seule adresse répond, et le nom sélectionné étant affiché en entier, on passe à une étape 25 de validation par l'utilisateur, ici prévue, au moyen d'une touche du clavier 4. Si, par contre, il subsiste une ambiguité, c'est-à-dire que plusieurs adresses répondent, on passe à une étape 24 d'attente puis d'analyse d'une deuxième lettre saisie au clavier 43.

Si aucune adresse n'est sélectionnée par les deux lettres saisies, on affiche un message d'erreur (cf étape 27). Si une seule adresse de l'agenda 6 est alors sélectionnée par l'ensemble des deux lettres, on passe à l'étape 25 de validation.

S'il subsiste plusieurs adresses sélectionnées, on reboucle l'étape 24 pour poursuivre l'analyse de lettres suivantes et reprendre le processus ci-dessus. Les divers rebouclages n'ont pas été représentés.

A une étape suivante 26, le nom sélectionné est transformé en son numéro d'appel associé dans l'agenda 6 et le microprocesseur 1 prend la ligne 10 et émet la numérotation d'appel DTMF voulue au moyen du modem 8.

Par contre si, à l'étape 21, c'est un chiffre qui est détecté en premier, c'est donc qu'il s'agit d'un numéro, éventuellement court, ou d'un préfixe numérique d'un indicatif mnémonique, ce dernier étant ici supposé alphabétique. Dans ce dernier cas, si une touche alphabétique du clavier 43 est ensuite activée, étape 32, on convertit par la table 7, à une étape 33, son adresse de scrutation, fournissant son code ASCII, en un code ASCII représentant un chiffre, c'est-à-dire l'un des codes ASCII du clavier numérique 41. Sinon, s'il s'agit de l'activation d'une touche du clavier numérique 41, on conserve son code ASCII.

Les codes ASCII ainsi définis sont ici mémorisés à mesure que des touches sont successivement activées, étape 35. Le rebouclage des étapes d'acquisition de la succession de codes n'a pas été figuré.

A une étape 36, on examine le nombre de chiffres saisis par rapport au nombre de chiffres prévu pour les numéros courts de l'agenda 5, ici à 2 chiffres.

S'il n'y a qu'un seul chiffre saisi, on affiche un message d'erreur, étape 44, après temporisation d'attente d'un deuxième chiffre. Si l'agenda numérique 5 comportait aussi des numéros courts à un seul chiffre, une temporisation d'attente d'une deuxième saisie, de lettre ou chiffre, permettrait de valider un chiffre unique reconnu de numéro court de l'agenda 5 qui serait suivi d'un temps mort de quelques secondes indiquant qu'il ne s'agit pas d'une chaîne de caractères telle que des indicatifs mnémoniques. Il s'agit de l'équivalent numérique des touches alphabétiques uniques, spécifiques de numéros d'appel respectifs, évoquées plus haut.

S'il y a deux chiffres à l'étape 36, on adresse l'agenda 5 pour y rechercher (étape 37) un numéro d'appel, qui ici est obligatoirement unique puisque les numéros courts ne dépassent pas ici deux chiffres. En cas de succès, le numéro d'appel ainsi sélectionné est émis en ligne à une étape 38.

Si, par contre, aucune reconnaissance d'adresse (absence de réponse de l'agenda 5) n'est intervenue à l'étape 36 sur un puis deux chiffres de tête, on attend une troisième saisie. En cas d'attente dépassant un seuil, un message d'erreur est affiché (cf étape 44). Si une troisième saisie intervient, on considère qu'il s'agit d'un indicatif mnémonique, étape 39. A une étape 40 suivante, on effectue une prise de la ligne 10 et on émet les premiers chiffres, ici deux chiffres, mémorisés à l'étape 35. Les codes ASCII des touches activées après ces deux chiffres de tête sont ensuite ici émis en ligne, avec conversion des lettres en chiffres (cf. étape 33).

D'une façon générale, et au-delà de cet exemple particulier, les agendas 5 et 6 peuvent comporter des chaînes courtes de carrières alphanumériques, chacune pouvant éventuellement comporter à la fois des chiffres, des lettres et des caractères annexes tels que ponctuation pour former fonctionnellement un seul agenda. On recherche d'abord, dans les agendas 5 et 6, une réponse, unique, fournissant un numéro d'appel sélectionné par les premiers caractères alphanumériques saisis au clavier 4 et, en cas de succès, avec temporisation éventuelle pour vérifier qu'aucun autre caractère ne suit, on émet en ligne le numéro d'appel ainsi désigné. Sinon, on considère qu'ils s'agit d'un indicatif mnémonique et on transcode les codes ASCII saisis, des touches de lettres ou caractères annexes, en codes ASCII de chiffres (table 7). Il peut être prévu un transcodage en bloc de deux lettres, ponctuations et autres caractères annexes, ou plus, en un bloc de chiffres. Dans ce cas, l'émission n'est pas effectuée au fil de l'eau, mais on mémorise temporairement les lettres par bloc, afin de les transcoder préalablement à l'émission. Ainsi, si l'on prend en compte par exemple 32 touches sur le clavier 43 et éventuellement le clavier 42, deux activations successives de touches fournissent plus de mille combinaisons, donc trois chiffres. Il peut encore être prévu que chacune ou certaines des touches du clavier 43 fournisse directement un nombre compris entre 0 et 99, ou même plus. Cela permet, par exemple, de composer très simplement un préfixe de service téléphonique, tel que numéros à appel gratuit, ou encore des numéros de centraux téléphoniques fréquemment appelés. On peut en outre doubler le nombre de codes ASCII, et passer ici à 64 codes, si l'on utilise la touche "majuscule", ou d'autres touches de même nature.

La rangée de touches supérieures 42 peut en outre être exploitée en mode numérique, donc en conjonction avec la touche "majuscule" du clavier 43. En effet, l'activation des touches numériques du clavier 42, dont l'adresse sera en définitive convertie en un code ASCII semblable à celui d'une des touches du clavier purement numérique 41, peut indiquer, par convention, que l'utilisateur est en train de composer un indicatif alphanumérique sur les claviers 42 et 43. Même si ce dernier, alphabétique, n'a pas encore été activé, on peut cependant s'orienter immédiatement vers un transcodage d'un indicatif d'appel qui va comporter une partie alphabétique (mnémonique) et ainsi rejeter d'emblée toute recherche dans un agenda de numéros sous forme uniquement numérique. Cela présente l'intérêt d'aboutir plus vite à la sélection voulue.

En outre, on peut discriminer entre eux des indicatifs d'appel numériques ou alphanumériques, courts et mnémoniques, apparemment semblables. Pour cela, on adresse les agendas les contenant d'après les codes d'adresse spécifiques des touches numériques 41 et 42, c'est-à-dire sans fusion des vingt codes d'adresse des touches numériques homologues de ces deux claviers en dix codes ASCII communs. Bref, en plus du clavier numérique 41, on exploite un clavier alphanumérique 42, 43 pour composer des indicatifs sous forme mnémonique, éventuellement courts.

## Revendications

1. Procédé d'appel d'un correspondant d'un réseau de communication (10), au moyen d'un appareil comportant un clavier numérique (41) et un clavier alphabétique (43), caractérisé par le fait que, dans une phase d'appel, des valeurs numériques d'indicatif mnémonique sont affectées au clavier alphabétique (43).

2. Procédé selon la revendication 1, dans lequel, lorsque l'appareil comporte un agenda (6) d'indicatifs courts comprenant des lettres, il est d'abord tenté de reconnaître, par l'agenda (6), l'un des numéros courts et l'affectation des valeurs numériques d'indicatif mnémonique n'intervient qu'en cas d'échec.

3. Procédé selon la revendication 2, dans lequel, lorsque les indicatifs courts commencent par des lettres et les indicatifs mnémoniques par des chiffres, on affecte aux touches alphabétiques (43) une valeur numérique lorsqu'elles sont activées après une touche numérique (41; 42).

4. Procédé selon l'une des revendications 1 à 3, dans lequel on affecte à plusieurs touches alphabétiques (43) une même valeur numérique.

5. Procédé selon l'une des revendications 1 à 4, dans lequel on transcode une touche alphabétique (43) en un nombre à plusieurs chiffres.

6. Procédé selon l'une des revendications 1 à 4, dans lequel on transcode une chaîne de caractères alphabétiques, engendrés par des activations successives de touches (43), en un nombre déterminé.

7. Procédé selon l'une des revendications 3 à 6, dans lequel le clavier alphabétique étant alphanumérique (42, 43), on discrimine l'actionnement des touches du clavier numérique (41) par rapport à l'actionnement des touches numériques du clavier alphanumérique (42, 43) pour reconnaître les indicatifs courts par rapport aux indicatifs mnémoniques.
